Europäisches Patentamt

European Patent Office

Office européen des brevets

(19)

(11) Veröffentlichungsnummer : **0 056 383**
**B1**

(12) **EUROPÄISCHE PATENTSCHRIFT**

(45) Veröffentlichungstag der Patentschrift :
20.02.85

(21) Anmeldenummer : 81901917.5

(22) Anmeldetag : 24.06.81

(86) Internationale Anmeldenummer :
PCT/EP 81/00081

(87) Internationale Veröffentlichungsnummer :
WO/8200520 (18.02.82 Gazette 82/06)

(51) Int. Cl.⁴ : **G 01 L 23/22, G 01 L 23/18,**
**G 01 L 9/02**

(54) SENSOR.

(30) Priorität : 25.07.80 DE 3028188

(43) Veröffentlichungstag der Anmeldung :
28.07.82 Patentblatt 82/30

(45) Bekanntmachung des Hinweises auf die Patenterteilung : 20.02.85 Patentblatt 85/08

(84) Benannte Vertragsstaaten :
DE FR GB SE

(56) Entgegenhaltungen :
DE-A- 2 515 435
GB-A- 834 485
GB-A- 966 527
GB-A- 981 793
US-A- 2 367 211
US-A- 2 872 812
US-A- 2 879 450
US-A- 3 089 341
Machine Design, vol. 42, no. 27, 12 November 1970 (Cleveland, US), "Carbon Resistor Forms Throw-Away Transducer", Seite 147
F.X. Eder, Moderne Messmethoden der Physik, Teil I, VEB-Verlag der Wissenschaften 1968, Seite 259

(73) Patentinhaber : ROBERT BOSCH GMBH
Postfach 50
D-7000 Stuttgart 1 (DE)

(72) Erfinder : DOBLER, Klaus
Bettäckerstrasse 12
D-7016 Gerlingen (DE)
Erfinder : HEINZ, Rudolf
Robert-Schumann-Strasse 3
D-7016 Gerlingen (DE)
Erfinder : SCHOOR, Ulrich
Glühwürmchenweg 40
D-7000 Stuttgart 40 (DE)
Erfinder : FREY, Thomas
Gartenstrasse 7
D-7255 Rutesheim (DE)

(74) Vertreter : Witte, Alexander, Dr.-Ing. et al
c/o Robert Bosch GmbH Robert-Bosch-Platz 1
D-7016 Gerlingen-Schillerhöhe (DE)

## Beschreibung

### Stand der Technik

Die Erfindung geht aus von einem Sensor nach der Gattung der unabhängigen Ansprüche 1 und 4.

Es sind bereits verschiedene Anordnungen bekannt, um den Druck in einem Medium dadurch zu messen, daß die Krafteinwirkung auf einen im Medium angeordneten Sensor erfaßt wird. Als Sensoren eignen sich hierzu piezokeramische Anordnungen, aber auch Anordnungen mit einem Draht, der seinen Widerstandswert unter Druckeinwirkung ändert, wie sie beispielsweise in dem Lehrbuch F. X. Eder, Moderne Meßmethoden der Physik, Teil I, VEB-Verlag der Wissenschaften 1968, Seite 259 beschrieben sind. Als druckempfindlicher Draht eignet sich insbesondere Manganindraht.

Die bekannten Sensoren der genannten Art haben jedoch neben erheblichen Kosten den Nachteil, daß sich ihre Eigenschaften bei Temperaturunterschieden stark ändern und sie nicht für spezielle Aufgaben geeignet sind, wie sie beispielsweise dann auftreten, wenn der Druck im Verbrennungsraum einer Brennkraftmaschine oder in zugeordneten Aggregaten gemessen werden soll.

Verbrennungsmotoren mit innerer Verbrennung sind nämlich nur scheinbar kontinuierlich arbeitende Maschinen. Zwar sind Drehmoment und Drehzahl quasikontinuierliche Ausgangsgrößen, sie werden jedoch durch eine schnelle Aufeinanderfolge von Einzelprozessen erzeugt.

Im Zuge der Optimierung des Betriebes von Brennkraftmaschinen, insbesondere im Hinblick auf eine Verminderung des Treibstoffverbrauches, ist es daher erforderlich, diese Zusammenhänge im einzelnen zu erfassen, um über die Beeinflussung des Einzelprozesses den Gesamtprozeß in der gewünschten Weise beeinflussen zu können.

Voraussetzung hierzu ist die Ermittlung des Zustandes im Inneren der Brennkraftmaschine. Typische Zustandsgrößen sind dabei Druck und Temperatur, die im Falle des idealen Gases den Gesamtzustand angeben. Zwar wird der Betrieb von Motoren mit innerer Verbrennung wesentlich auch von chemischen Prozessen und Stoffveränderungen bestimmt, so daß dieser Betrieb nicht global mit Druck und Temperatur beschreibbar ist, dennoch gibt die Beobachtung von Druck und Temperatur ausreichende Auskunft über die Veränderungen der Zustandsgrößen über den Motorzyklus.

Dabei ist es bekannt, im Brennraum einer Brennkraftmaschine die Erfassung der zeitlichen und räumlichen Ausbreitung des Verbrennungsvorganges, die Erfassung des Zündzeitpunktes, die Erfassung von Einspritzvorgängen sowie die Ausmessung von irregulären Verbrennungen vorzunehmen.

Zu diesen irregulären Verbrennungen gehört auch das sogenannte « Klopfen », das bei Brennkraftmaschinen unter bestimmten Arbeitsbedingungen auftritt. Man versteht hierunter tonfrequente Schwingungen des komprimierten Kraftstoff-Luft-Gemisches, die durch eine Stoßwelle ausgelöst werden. Während dieser Schwingungen ist der Wärmeübergang an Kolbenund Zylinderwänden der Brennkraftmaschine stark erhöht. Dies hat eine schädliche thermische Überlastung dieser Flächen zur Folge, so daß das Klopfen grundsätzlich zu vermeiden ist. Da man jedoch andererseits bestrebt ist, den zur Verfügung stehenden Arbeitsbereich der Brennkraftmaschine möglichst weitgehend auszunutzen, ist es erforderlich, Mittel vorzusehen, die das Klopfen frühzeitig und sicher anzeigen, um auf diese Weise eine Regelung der Brennkraftmaschine realisieren zu können, bei der die Brennkraftmaschine stets kurz unterhalb der Klopfgrenze betrieben wird.

Aus der US-A-2 879 450 ist bereits ein Sensor nach der Gattung der unabhängigen Ansprüche 1 und 4 bekannt, bei dem der elektrische Leiter, der seinen Widerstandswert bei Veränderung des Drucks im Brennraum der Brennkraftmaschine ändert, nicht direkt druckempfindlich ist. Der elektrische Leiter ändert seinen Widerstandswert vielmehr in Abhängigkeit von Zugspannungen und ist auf eine flexible, zylinderförmige Wand aufgebracht, die einen ringförmigen Hohlraum um eine Zündkerze druckdicht umschließt, wobei der Hohlraum über Kanäle im Gewindebereich der Zündkerze mit dem Atmungsraum der Zündkerze verbunden ist, der sich zwischen deren Mittelektrode und deren Außengewinde befindet und sich bis zum Brennraum der Brennkraftmaschine erstreckt. Die Druckänderungen im Brennraum verursachen Zugspannungen in der zylinderförmigen Wand, die den Widerstandswert des auf die Wand aufgebrachten elektrischen Leiters verändern. Diese bekannte Anordnung ist besonders aufwendig und teuer.

### Vorteile der Erfindung

Der erfindungsgemäße Sensor mit den kennzeichnenden Merkmalen des unabhängigen Anspruchs 1 hat demgegenüber den Vorteil, daß eine Messung im Brennraum einer Brennkraftmaschine mit einfachsten Mitteln möglich wird, wobei als Träger eine handelsübliche Zündkerze eingesetzt werden kann, die nicht mit einer nach außen gehenden Bohrung versehen werden muß.

Derselbe Vorteil wird mit den kennzeichnenden Merkmalen des unabhängigen Anspruches 4 erzielt, wobei der ohnehin vorhandene, zum Vorglühen dienende elektrische Leiter einer Glühkerze als druckempfindliches Element herangezogen wird.

Dabei wird ferner eine besonders gute Wirkung dadurch erzielt, daß als seinen Widerstandswert unter Druckeinfluß ändernder Leiter eine zum Vorglühen dienende Leiterbahn auf einer keramischen Glühstiftkerze verwendet wird. Dadurch, daß diese Leiterbahn ihrerseits von einer dichten Schutzschicht umgeben ist, bestehen weitgehende Möglichkeiten zur Wahl des Leiterbahnmateriales, so daß ein Material ausgewählt werden kann, bei dem sich die Druck- und/oder Temperatureinwirkung in besonderer Weise in der Änderung des Widerstandswertes niederschlägt.

## Zeichnung

Die Erfindung ist in der Zeichnung dargestellt und in der nachfolgenden Beschreibung näher erläutert. Es zeigen

Figur 1 ein Ausführungsbeispiel eines Sensors ;

Figur 2 eine Abwandlung einer Einzelheit der in Figur 1 dargestellten Sensoranordnung mit teilweiser Schirmung des Drahtes ;

Figur 3 eine erfindungsgemäße Sensoranordnung in einer Zündkerze ;

Figur 4 eine schematische Darstellung einer erfindungsgemäßen Sensoranordnung mit Ausweteschaltung ;

Figur 5a und b einen Schnitt bzw. eine Ansicht einer keramischen Glühstiftkerze, wie sie bei einer Anordnung gemäß Figur 4 verwendet werden kann.

## Beschreibung der Ausführungsbeispiele

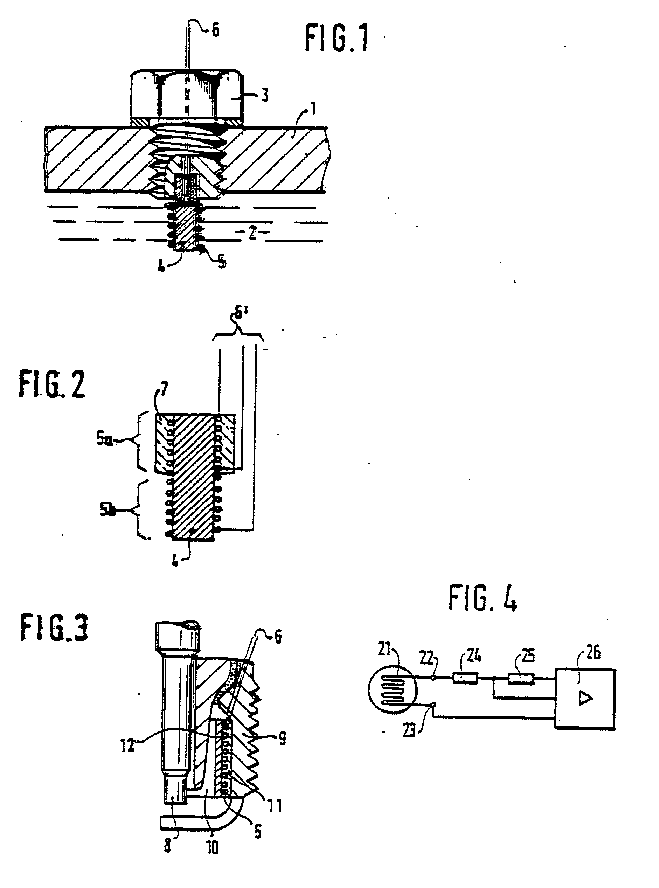

Bei der in Figur 1 dargestellten Ausführungsform eines Sensors ist mit 1 die Wandung eines Behälters angedeutet, in dem sich ein Druckmedium 2 befindet. In der Wandung 1 ist eine Zylinderschraube 3 angeordnet, die druckraumseitig einen Trägerkörper 4 trägt, auf den ein Draht 5 aufgewickelt ist, der physikalisch derart beschaffen ist, daß er seinen Widerstand in Abhängigkeit von dem auf ihn einwirkenden Druck ändert. Besonders eignen sich hierzu Manganindrähte. Der Draht 5 ist dabei in Gestalt einer Spule, eines Mäanders oder dgl. ausgebildet, so daß auf kleinem Raum eine große Drahtlänge vorliegt und damit eine große Widerstandsänderung bei sich änderndem Druck auftritt. Der Draht 5 ist über Zuleitungen 6, die druckfest nach außen geführt sind, an eine in Figur 1 nicht dargestellte Meßanordnung angeschlossen. In dieser meßanordnung wird in an sich bekannter Wiese der Widerstandswert des Drahtes 5 überwacht. Die Wandung 1 kann dabei z. B. eine Zylinderwand oder die Gehäusewand einer Einspritzpumpe sein, so daß mit der Anordnung gemäß Figur 1 der Brennraumdruck bzw. der Druck in einer Einspritzpumpe gemessen werden kann. Es versteht sich jedoch von selbst, daß mit der beschriebenen Anordnung auch andere, vorzugsweise hohe Drücke gemessen werden können. Bei der in Figur 2 dargestellten weiteren Ausführungsform eines Sensors wird eine Brückenschaltung am Beispiel einer Spulenanordnung veranschaulicht. Der Draht 5 ist dabei wiederum auf einen Trägerkörper 4 spulenartig aufgewickelt, wobei jedoch ein erster Teil 5a des Drahtes mit einer druckfesten Schirmung 7 umgeben ist und der andere Teil 5b des Drahtes sich ungeschirmt im Druckmedium befindet. Die Teile 5a, 5b des Drahtes werden über eine dreiadrige Zuleitung 6' in den Außenraum geführt. Im Außenraum werden die Teile 5a, 5b beispielsweise mit zwei weiteren Widerständen zu einer Wheatstone'schen Vollbrückenschaltung verschaltet. Dabei dient der vorzugsweise durch eine Kunststoff- oder Metallschicht abgedeckte Teil 5a des Drahtes als Referenzwiderstand zur Kompensation von Temperatureinflüssen.

Es versteht sich von selbst, daß die Anordnungen als Spule oder Mäander nur beispielhaft genannt sind und daß auch eine Fülle anderer geometrischer Gestaltungsformen des Drahtes, bei denen eine große Drahtlänge auf kleinem Raum auftritt, verwendet werden kann.

Bei der in Figur 3 dargestellten Ausführungsform eines erfindungsgemäßen Sensors wird eine Zündkerze verwendet, die zwischen der Mittelelektrode 8 und dem Außengewinde 9 einen sogenannten Atmungsraum 10 aufweist. Dieser Atmungsraum 10 eignet sich zur Aufnahme einer erfindungsgemäßen Sensoranordnung in der Weise, daß beispielsweise an der Innenseite des Außengewindes 9 eine Drahtspule 5 eingebracht wird, die vorzugsweise mit einer Schutzschicht 11 und — falls erforderlich — mit einer elektrischen Abschirmschicht 12 versehen ist. Die Zuleitung 6 wird in diesem Fall durch das Kerzeninnere nach außen geführt. Mit dieser Anordnung ist es möglich, den Druck im Brennraum einer Brennkraftmaschine zu überwachen; da sich der Druck des Brenngases auf die Spule 5 überträgt. Es ist selbstverständlich auch möglich, die Spule 5 in der Weise zu teilen, wie dies in Figur 2 dargestellt und weiter oben im einzelnen beschrieben ist.

In Figur 4 ist mit 21 ein elektrischer Leiter bezeichnet, wie er üblicherweise in einer Glühkerze zum Vorglühen bei selbstzündenden Brennkraftmaschinen, insbesondere Dieselmotoren verwendet wird. Derartige Leiter 21 von Glühkerzen sind aus dem Stand der Technik in den unterschiedlichsten Formen bekannt. Der Leiter 21 der Glühkerze ist auf Klemmen 22, 23 geführt, durch die er einerseits mit einem zum Glühen erforderlichen Strom aus einer in der Figur nicht dargestellten Stromquelle versorgt wird, durch die jedoch andererseits erfindungsgemäß sein Widerstandswert erfaßt wird. Dies geschieht nach dem Ausführungsbeispiel gemäß Figur 4 mit Hilfe einer Halbbrückenschaltung, die aus den Widerständen 24 und 25 in Zusammenwirkung mit dem elektrischen Leiter 21 besteht. Die Widerstände 24 und 25 sind in Reihe geschaltet, wobei ein Endpunkt dieser Reihenschaltung sowie der Mittelpunkt auf Schaltmittel 26 geführt sind und der andere Endpunkt an die Klemme 22 angeschlossen ist. Die Klemme 23 ist ebenfalls an die Schaltmittel 26 angeschlossen. Die Schaltmittel 26 umfassen zunächst einen an sich bekannten Verstärker für kleine elektrische Signale, vorzugsweise einen Verstärker, wie er für die Auswertung von Signalen von Dehnungsmeßstreifen verwendet wird. Die Schaltmittel 26 können darüber hinaus eine Auswerteschaltung für Klopfsignale enthalten, wie sie beispielsweise in der DE-A-30 10 324, veröffentlicht am 1.10.1981, beschrieben ist.

Es versteht sich von selbst, daß der Leiter 21 seine elektrischen Eigenschaften nicht nur unter Einwirkung des im Brennraum herrschenden Druckes, sondern auch unter Einwirkung der im Brennraum herrschenden Temperatur ändert. Die in Figur 4 dargestellte Anordnung läßt sich daher, je nachdem, welches Material für den Leiter 21 verwendet wird, in gleicher Weise zur Messung der Brennraumtemperatur heranziehen bzw. zur Analyse des Temperaturverlaufs im Hinblick auf die Ausmessung des Verbrennungsvorganges.

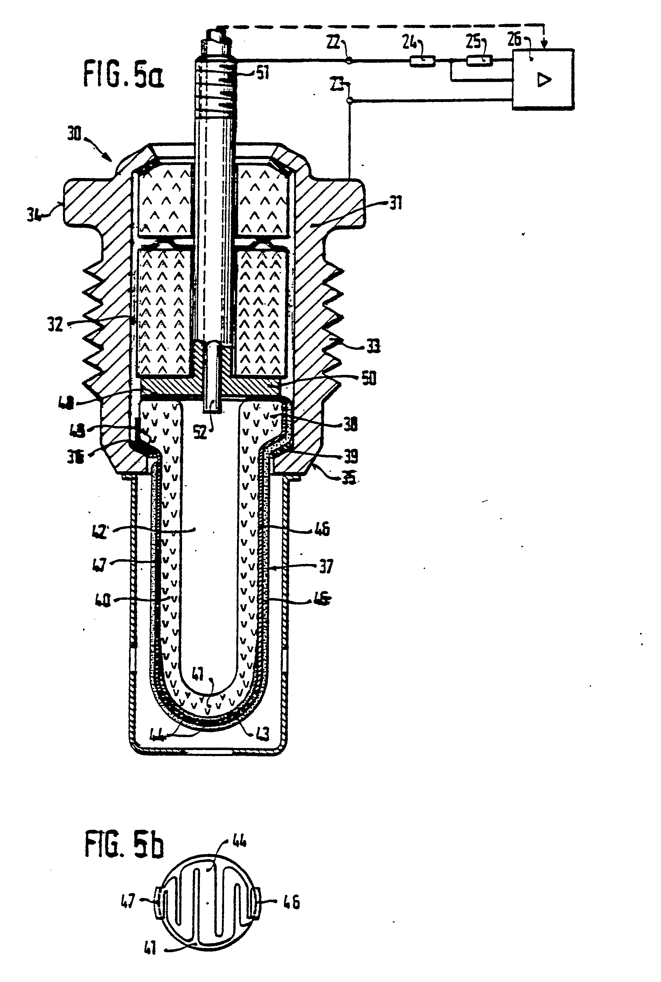

In Figur 5a und b ist eine keramische Glühstiftkerze dargestellt. Die Glühkerze 30 hat ein rohrförmiges Metallgehäuse 31, dessen Längsbohrung mit 32 bezeichnet ist und das an seiner Außenseite für den Einbau in einen nicht dargestellten Motor ein Einschraubgewinde 33, einen Schlüsselsechskant 34 und einen am brennraumseitigen Endabschnitt angeordneten Dichtsitz 35 besitzt. Die Gehäuse-Längsbohrung 32 ist an ihrem brennraumseitigen Endabschnitt mit einer Schulter 36 versehen, auf der ein Glühkörper 37 mit einem nach außen weisenden Flansch 38 aufliegt ; zwischen den Glühkerzen-Flansch 38 und die Längsbohrungs-Schulter 36 des Metallgehäuses 31 ist ein kupferner Kontaktring 39 eingelegt, der gleichzeitig als Dichtung zwischen dem Glühkörper 37 und dem Gehäuse 31 dient.

Der Glühkörper 37 hat als Träger ein Keramikrohr 40, das an seinem brennraumseitigen Endabschnitt mit einem Boden 41 verschlossen ist und aus dem brennraumseitigen Endabschnitt des Metallgehäuses herausragt. Das Keramikrohr 40 besteht aus elektrisch isolierendem Keramikmaterial oder Glaskeramik, vorzugsweise aus Aluminiumoxid und hat an seinem aus dem Gehäuse 31 herausragenden Endabschnitt einen Außendurchmesser von etwa 5 mm ; der Bereich des Bodens 41 hat eine Wanddicke von 0,5 mm, kann jedoch entsprechend der Anwendung einer solchen Glühkerze 30 auch zwischen 0,3 und 0,8 mm dick sein. Um dem Glühkörper 37 eine möglichst geringe Wärmekapazität zu geben, bleibt die Wanddicke des Keramikrohres 40 bevorzugterweise bis zum Flansch 38 hinauf im wesentlichen gleich und der Keramikrohr-Innenraum 42 wird im wesentlichen unausgefüllt gelassen. Der Boden 41 ist als Kuppe ausgebildet, kann aber auch von anderer Konfiguration sein.

Der Boden 41 des Keramikrohres 40 ist auf seiner Außenseite mit einer dünnen porösen, elektrisch isolierenden Zwischenschicht 43 bedeckt, die vorzugsweise aus Aluminiumoxid besteht, Wärmedehnungen auffängt und einen zu schnellen Wärmeübergang vom Heizelement 44 auf das Keramikrohr 40 verhindert ; die Zwischenschicht 43 kann auf dem Keramikrohr 40 aber auch weiter in Richtung Keramikrohr-Flansch 38 verlängert sein.

Das Heizelement 44 ist im wesentlichen auf den Bereich des Keramikrohr-Bodens 41 beschränkt, ist schichtförmig ausgebildet und besteht aus einer Platin-Rodiumlegierung, die mit keramischem Material wie z. B. Aluminiumoxid versetzt ist. Anstelle der Platin-Rodium-Legierung können auch andere Platinmetalle, Legierungen von Platinmetallen oder auch andere geeignete elektrisch leitende Stoffe (z. B. Ag-Perowskit) für das Heizelement 44 Verwendung finden. Wie aus Figur 5b ersichtlich ist, hat das Heizelement 44 im vorliegenden Beispiel wellenförmige Konfiguration, was eine hohe Energiedichte ermöglicht. Das Heizelement 44 nimmt auf dem Keramikrohr-Boden 41 eine kleinere Fläche ein als die Zwischenschicht 43. Dieses Heizelement 44 ist mit einer elektrisch isolierenden, dichten Schutzschicht 45 aus keramischem Material, z. B. Aluminiumoxid, bedeckt, die es vor Abrasion, Korrosion und Kurzschluß schützt.

Das Heizelement 44 ist an seinen beiden Enden mit einer ersten Leiterbahn 46 bzw. einer zweiten Leiterbahn 47 verbunden, die aus einer Mischung von Platin und Aluminiumoxid bestehen, aber auch aus anderen Platinmetallen bzw. Legierungen von Platinmetallen oder auch aus anderen geeigneten elektrisch leitenden Stoffen (z. B. Ag-Perowskit) und einem Keramikmaterial bestehen können. Die erste Leiterbahn 46 führt bis hinauf auf die Stirnseite 48 des Keramikrohr-Flansches 38 und steht dort mit einem Kontaktteil 50 in Verbindung, das auf der brennraumabgewandten Seite in einem Kontaktgewinde 51 ausläuft, das an die Klemme 22 angeschlossen ist. Die zweite Leiterbahn 47 endet hingegen bereits hinter der Flansch-Brennraumseite 49 und steht über den kupfernen Kontaktring 39 mit dem Metallgehäuse 31 in Verbindung, das seinerseits an die Klemme 23 angeschlossen ist.

Durch die Halbbrückenschaltung bestehend aus den Widerständen 24 und 25 wird nun der Widerstandswert der Leiterbahn bestehend aus den Abschnitten 44, 46, 47 erfaßt und — wie oben im einzelnen beschrieben — in den Schaltmitteln 26 ausgewertet.

Da das Keramikrohr 40 bei der Glühkerze gemäß Figur 5a und b aufgrund seiner geringen Wandstärke transparent ist, wird in bevorzugter Ausgestaltung der Erfindung weiterhin ein optischer Aufnehmer in Gestalt eines Lichtleiterstabes 52 vorgesehen, der das Licht auffängt, das aus dem Brennraum durch das Keramikrohr 40 hindurch in dessen Innenraum 42 einfällt. Das über den Lichtleiterstab 52 erfaßte Licht wird in an sich bekannter Weise weitergeleitet, in elektrische Signale umgewandelt und ausgewertet, wie dies in Figur 5a durch die Verbindung des Lichtleitstabes 52 zu den Schaltmitteln 26 angedeutet ist.

## Ansprüche

1. Sensor zur Erfassung des Drucks im Brenn

raum einer Brennkraftmaschine unter Verwendung eines seinen Widerstandswert unter Druckeinwirkung ändernden elektrischen Leiters, der von dem im Brennraum herrschenden Druck beeinflußt wird, dadurch gekennzeichnet, daß ein direkt druckempfindlicher Leiter (5) als seinen Widerstandswert unter Druckeinwirkung ändernder elektrischer Leiter verwendet wird und in einem zwischen Mittelelektrode (8) und Außengewinde (9) befindlichen Atmungsraum (10) einer Zündkerze angeordnet ist.

2. Sensor nach Anspruch 1, dadurch gekennzeichnet, daß der elektrische Leiter (5) als Draht ausgebildet ist.

3. Sensor nach Anspruch 2, dadurch gekennzeichnet, daß ein Teil (5a) des Drahts (5) druckgeschirmt ist und mit dem übrigen Teil (5b) des Drahts (5) je einen Zweig einer Brückenanordnung bildet.

4. Sensor zur Erfassung des Drucks im Brennraum einer Brennkraftmaschine mit einem seinen Widerstandswert unter Druckeinwirkung ändernden elektrischen Leiter, der von dem im Brennraum herrschenden Druck beeinflußt wird, und mit einer die Änderung des Widerstandswerts erfassenden Schaltung (26), dadurch gekennzeichnet, daß als seinen Widerstandswert unter Druckeinwirkung ändernder elektrischer Leiter der zum Vorglühen dienende elektrische Leiter (21) einer Glühkerze verwendet wird.

5. Sensoranordnung nach Anspruch 4, dadurch gekennzeichnet, daß der Leiter (21) als Leiterbahn (44, 46, 47) einer keramischen Glühstiftkerze (30) ausgebildet ist.

6. Sensoranordnung nach Anspruch 5, dadurch gekennzeichnet, daß die Leiterbahn (44, 46, 47) im wesentlichen auf den Bereich des brennraumseitigen Bodens (41) eines im wesentlichen einen leeren Innenraum (42) aufweisenden, den Glühstift bildenden Keramikrohres (40) begrenzt, schichtförmig ausgebildet und vorzugsweise von einer elektrisch isolierenden, dichten Schutzschicht (45) bedeckt ist.

7. Sensoranordnung nach Anspruch 6, dadurch gekennzeichnet, daß die Leiterbahn (44) auf dem Keramikrohr-Boden (41) ein im wesentlichen wellenförmige Konfiguration hat.

8. Sensoranordnung nach einem der Ansprüche 1 bis 7, dadurch gekennzeichnet, daß die Kerze (30) ferner einen optischen Aufnehmer (52) aufweist.

**Claims**

1. Sensor for sensing the pressure in the combustion chamber of an internal combustion engine, using an electrical conductor which changes its resistance under the action of pressure and which is influenced by the pressure prevailing in the combustion chamber, characterised in that a directly pressure-sensitive conductor (5) is used as an electrical conductor which changes its resistance under the action of pressure and is located in a breathing space (10) located between the central electrode (8) and the outer thread (9) of a spark plug.

2. Sensor according to Claim 1, characterised in that the electrical conductor (5) is in the form of a wire.

3. Sensor according to Claim 2, characterised in that a part (5a) of the wire (5) is screened from pressure, and this part and the remaining part (5b) of the wire (5) each form one arm of a bridge arrangement.

4. Sensor for sensing the pressure in the compression chamber of an internal combustion engine having an electrical conductor which changes its resistance under the action of pressure and which is influenced by the pressure prevailing in the combustion chamber and having a circuit (2b) which senses the change in resistance, characterised in that the electrical conductor (21), serving for preheating, of a glow plug is used as the electrical conductor which changes its resistance under the action of pressure.

5. Sensor arrangement according to Claim 4, characterised in that the conductor (21) is in the form of a conductor track (44, 46, 47) of a ceramic sheathed-element glow plug (30).

6. Sensor arrangement according to Claim 5, characterised in that the conductor track (44, 46, 47) is essentially restricted to the area of the bottom (41) — on the combustion chamber side — of a ceramic tube (40) which has essentially an empty inner cavity (42) and forms the glow pin, the track being in the form of a layer and preferably being covered by an electrically insulating, dense protective layer (45).

7. Sensor arrangement according to Claim 6, characterised in that the conductor track (44) has an essentially wave-form configuration on the bottom (41) of the ceramic tube.

8. Sensor arrangement according to one of Claims 1 to 7, characterised in that the plug (30) moreover possesses an optical sensor (52).

**Revendications**

1. Détecteur permettant de capter la pression dans la chambre de combustion d'un moteur à combustion interne en utilisant un conducteur électrique modifiant sa valeur de résistance sous l'action de la pression, et qui est influencé par la pression régnant dans la chambre de combustion, détecteur caractérisé en ce qu'un conducteur (5) directement sensible à la pression, est utilisé comme conducteur électrique modifiant sa valeur de résistance sous l'action de la pression, et ce conducteur est disposé dans une chambre de respiration (10) d'une bougie d'allumage se trouvant entre l'électrode médiane (8) et le filetage externe (9) de cette bougie.

2. Détecteur selon la revendication 1, caractérisé en ce que le conducteur électrique (5) est un fil métallique.

3. Détecteur selon la revendication 2, caractérisé en ce qu'une partie (5a) du fil métallique (5) est protégée contre la pression et constitue ainsi que l'autre partie (5b) du fil métallique (5) respectivement une branche d'un circuit de pont.

4. Détecteur pour la détection de la pression dans la chambre de combustion d'un moteur à combustion interne avec un conducteur électrique modifiant sa valeur de résistance sous l'effet de la pression, et qui est influencé par la pression régnant dans la chambre de combustion, et avec un circuit (26) détectant la modification de la valeur de la résistance, détecteur caractérisé en ce que le conducteur électrique (21) servant au pré-chauffage d'une bougie à incandescence est utilisé comme conducteur électrique modifiant sa valeur de résistance sous l'effet de la pression.

5. Dispositif de détection selon la revendication 4, caractérisé en ce que le conducteur (21) revêt la forme d'une piste conductrice (44, 46, 47) d'une bougie-crayon à incandescence (30) en céramique.

6. Dispositif de détection selon la revendication 5, caractérisé en ce que la piste conductrice (44, 46, 47) est essentiellement limitée à la zone du fond (41) côté chambre de combustion, d'un tube de céramique (40) constituant le crayon à incandescence et comportant essentiellement un espace interne vide (42), cette piste conductrice étant réalisée sous la forme d'une couche et étant de préférence recouverte d'une couche de protection étanche (45) électriquement isolante.

7. Dispositif de détection selon la revendication 6, caractérisé en ce que la piste conductrice (44) a sur le fond (41) du tube en céramique, une configuration essentiellement ondulée.

8. Dispositif de détection selon une des revendications 1 à 7, caractérisé en ce que la bougie (30) comporte en outre, un capteur optique (52).

FIG.1

FIG.2

FIG.3

FIG. 4

FIG. 5a

FIG. 5b